# EUROPEAN PATENT APPLICATION

(11) **EP 4 757 265 A1**
(43) Date of publication of application: **10.06.2026**
(21) Application number: 24307040.6
(22) Date of filing: 05.12.2024
(51) Int. Cl.: H04L 41/06, B61L 15/00, H04L 41/0866, H04L 41/12, H04L 43/0811

(54) **METHOD OF MONITORING A COMPUTER NETWORK ONBOARD A VEHICLE AND CORRESPONDING COMPUTER SYSTEM AND VEHICLE**

(71) Applicant: ALSTOM Holdings, 93400 Saint-Ouen-sur-Seine (FR)
(72) Inventor: FONTAINE, David, 01360 LOYETTES (FR); CHAUMETTE, Christian, 69230 SAINT GENIS LAVAL (FR)
(74) Representative: Plasseraud IP

(57) **Abstract**

The method is for monitoring a computer network comprising switches (20A-20F) and end devices (22A-22H) defining a network architecture, each switch (20A-20F) comprising a plurality of connection ports (P1-P8).

The method comprises:
- an acquiring step to acquire a current network status of each switch (20A-20F), including for each connection port (P1-P8) a connection data indicating whether another switch (20A-20F) or an end device (22A-22H) is connected to the connection port (P1-P8) and optionally an identification data of said switch (20A-20F) or end device (22A-22H) connected to the connection port (P1-P8); and
- a comparing step to compare the current network status with a reference network status to detect an abnormality of the computer system.

## Description

The invention relates to the domain of computer networks provided onboard vehicles, in particular railway vehicles, such as trains, tramways or subways, naval vessels such as ships, submarine, floating platforms and aircrafts, such as airplanes or helicopters.

Majority of recent vehicle such as railway vehicle generally comprises an on-board computer network based on switched Ethernet technology using network switches which are interconnected according to the expected topology. Application computers known as End Devices are connected to these switches and are being configured to control respective function they are in charge such as lighting system, air conditioning system, door control system...

To ensure the security of the vehicle and its passengers, it is desirable to detect any potential compromission of the on-board computer network coming from both an intentional or unintentional computer loss or a unexpected device intrusion.

Intrusion Detection System (IDS) is the classical answer for railway industry to perform the on-board network computer compromission evaluation with capability to analyze the traffic and then detect potential abnormal activity.

However, IDS are generally gathering data on-board and analysis is performed off line on the wayside leading to high level complexity and response time issue in case of intrusion detection.

The aim of the invention is to propose a method for monitoring a computer network onboard a vehicle which can detect potential security threats rapidly and reliably in a very simple way without any wayside contribution.

To this aim, invention relates to a method for monitoring a computer network located onboard a vehicle, for example a train, the computer network comprising a plurality of switches and a plurality of end devices connected together with defining a network architecture, each switch comprising a plurality of connection ports, each switch being connected to one connection port of at least one other among the plurality of switches and each end device being connected to one connection port of one of the switches,
characterized in that the method comprises the following steps implemented by a network management system (NMS) provided onboard the vehicle:
- an acquiring step to acquire a current network status of each switch among the plurality of switches, the current network status of each switch including for each connection port of each switch a connection data indicating whether another switch or an end device is connected to the connection port and optionally an identification data of said switch or end device connected to the connection port ;
- a comparing step to compare the current network status with a reference network status to detect an abnormality of the computer system.

According to further advantageous aspects of the invention, the method comprises one or more of the following optional features, taken alone or in all technically possible combinations:
- the acquiring step is repeated periodically to monitor the computer network continuously.
- the method comprises also the following steps:
- a requesting step to request a primary connection status for each switch of the plurality of switches, the primary connection status including for each connection port of the switch a primary connection data indicating whether another switch or an end device is connected to the connection port and optionally a primary identification data of said switch or end device connected to the connection port during an initialization period; and
- establishing the reference network status from the primary connection status of each switch.
- the method comprises an emitting step to emit a notification upon detection of the abnormality.
- at emitting step, a warning notification is emitted upon detection of an abnormality corresponding to a first level of abnormality and an alert notification is emitted upon detection of an abnormality corresponding to a second level of abnormality, the second level being higher than the first level.
- the method comprises a step of evaluation, wherein a compromise value is calculated representing a level of abnormality, the compromise value being incremented upon detection of each additional abnormality.
- the identification data of each end device includes a fixed physical address and/or a variable identification number.
- the fixed physical address is a media access control address and/or the variable identification number is an internet protocol address.
- at emitting step, traffic data representative of the traffic data is collected via at least each connection port associated to a potential abnormality, the traffic data being used in the method to confirm the abnormality.
- the comparing step includes a detection of modification(s) of the current network status with respect to the reference network status, the modification(s) including: connection of at least one new end device to the connection port of one of the switches and/or disconnection of at least one end device from the connection port of one of the switches and/or a displacement of at least end device from one connection port of one of the switched to another connection port of one of the switches.
- the computer network is a part of a train control and monitoring system (TCMS) of a train.
- the network architecture exhibits a ring network topology, a linear network topology or a star network topology.

The invention also relates to a system provided onboard a vehicle, for example a train, the computer system comprising a computer network comprising a plurality of switches and a plurality of end devices connected together and defining an network architecture, each switch comprising a plurality of connection ports, each switch being connected to one connection port of at least one other among the plurality of switches and each end device being connected to one connection port of one of the switches.
characterized in that it comprises a network management system (NMS) provided onboard the vehicle, the network management system (NMS) comprising:
- an acquisition module adapted for acquiring a current network status of each switch of the plurality of switches, the current network status of each switch including for each connection port of the switch a connection data indicating whether another switch or an end device is connected to the connection port and optionally an identification data of said other switch or said end device; and
- a comparison module adapted for comparing the current network status with a reference network status to detect an abnormality of the computer network.

The invention also relates to a vehicle comprising a computer system, in particular a railway vehicle or a train comprising a train control and monitoring system (TCMS) including the computer system.

The invention will be better understood, based on the following description, given solely by way of non-limiting example and with reference to the appended drawings, in which:
- Figure 1 is a schematic view of a computer system onboard a vehicle where end devices are not represented and must be understood as connected to switches;
- Figure 2 is a schematic view of a computer network of the computer system shown in Figure 1;
- Figure 3 is a table representing a reference network architecture of the computer network of Figure 2 with "reference network architecture" referring to the architecture "as designed";
- Figure 4 is a table representing a current network architecture of the computer network of Figure 2 with "current network architecture" referring to the architecture "as observed"; and
- Figure 5 is a flowchart of a method of monitoring a computer network onboard a vehicle implemented in the computer system of Figure 1.

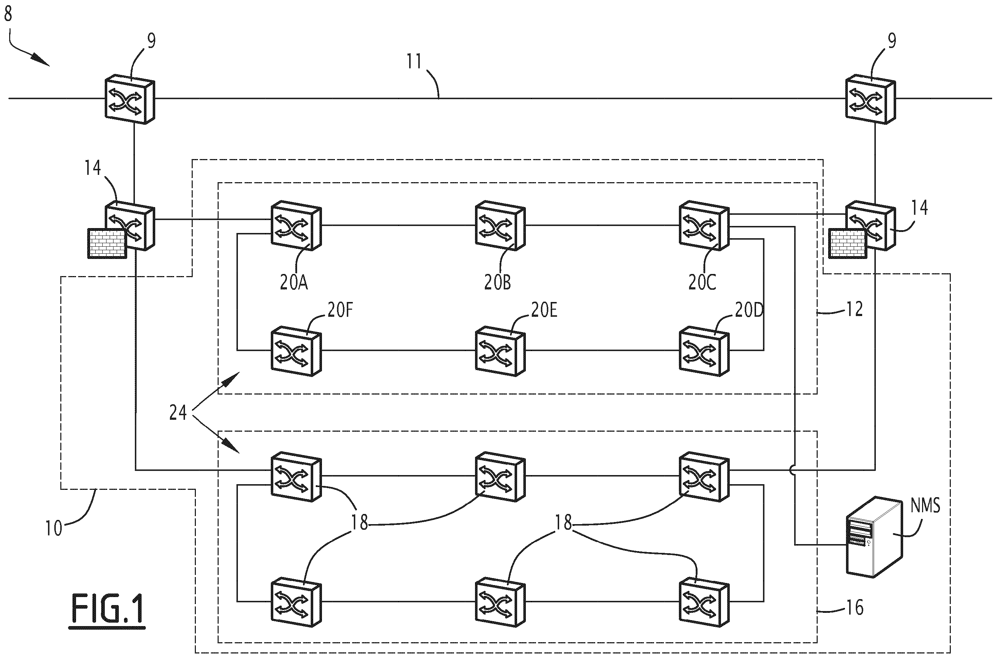

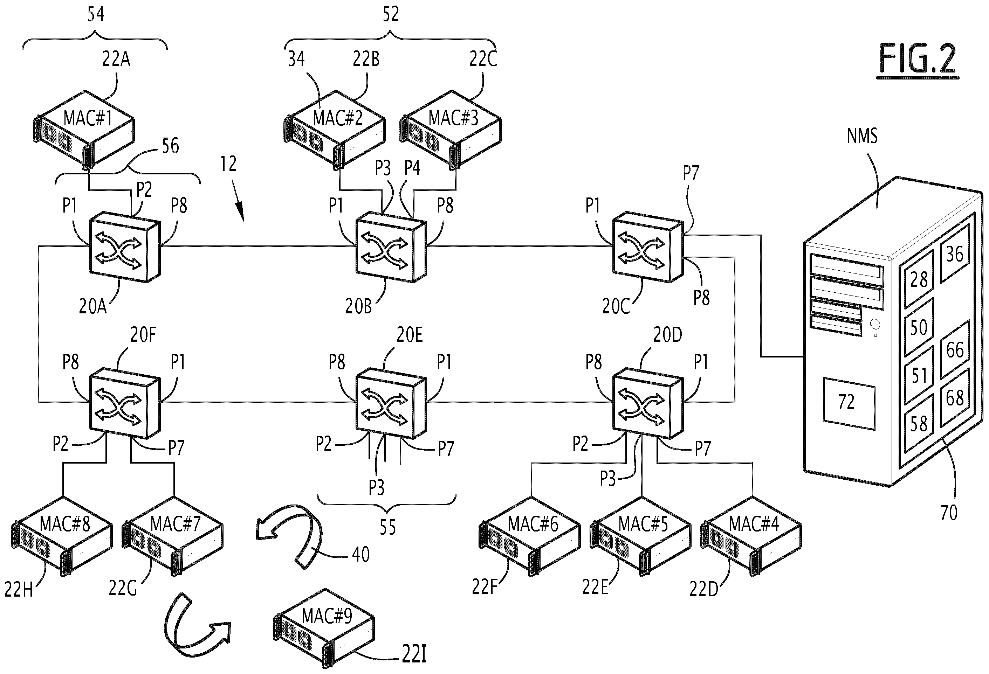

As illustrated on Figures 1 and 2, a computer system 10 is onboard a vehicle 8.

The vehicle 8 is any type of vehicle, such as an aircraft, a vessel or a land vehicle, in particular a land guided vehicle such as a railway vehicle. In some examples, the computer system 10 is onboard a railway vehicle, in particular a train.

The vehicle 8 is for example configured for transporting passengers and/freight.

The computer system 10 is for example connected to a vehicle network 11 via vehicle routing switches 9. The vehicle network 11 is provided for communication between distinct computer networks or computer systems provided in the vehicle 8.

When the vehicle 8 is a train, the vehicle routing switches are named train routing switches (TRS) and the vehicle network 11 is a train network, configured for example for allowing data communication between distinct computer systems 10 provided in distinct consists, i.e. sets of grouped coaches.

The computer system 10 comprises a computer network 12 and a network management system NMS provided onboard the vehicle 8.

The computer network 12 is provided onboard the vehicle 8 for connection of a limited number of authorized end devices 22A - 22H.

The end devices 22A - 22H are for example configured to control and/or monitor onboard functions of the vehicle 8.

When the vehicle 8 is provided as a train, the computer network 12 is for example part of a train control and monitoring system TCMS.

The train control and monitoring system TCMS is an onboard system configured to control and monitor onboard functions of the train.

Main functions carried out by the train control and monitoring system TCMS are for example control functions like propulsion or door management, maintenance functions like troubleshooting and status management, driving aid function like driving advisory system.

These functions are often mission critical for the vehicle 8, designed to provide safe and secure operations.

These functions are for example implemented by the end devices 22A - 22H connected to the computer network 12 of the computer system 10.

Depending on the complexity of the train configuration (several consists connected together), the computer network 12 is sometimes connected to the train network 11 via one or more security gateways 14. Each security gateway 14 is configured to control and filter messages exchanged between the computer network 12 and the vehicle network 11.

Optionally, the computer system 10 comprises an auxiliary computer network 16 which is connected to the computer network 12 and/or the vehicle network 11, preferably via the security gateways 14.

The auxiliary computer network 16 is for example configured for the connection of end devices (not shown) configured for controlling and/or monitoring auxiliary functions of the vehicle 8.

In a railway context, the auxiliary computer network 16 is often dedicated to connect devices as displays, screens, speakers, cameras grouped around different sub-systems like Passenger Information System (PIS), Public Address System (PAS) or Close Circuit TV (CCTV) which are physically segregated from TCMS because of cybersecurity constraints.

As illustrated on Figure 2, the computer network 12 comprises a plurality of switches 20A-20F connected together and the plurality of end devices 22A-22H connected to the switches 20A-20F.

The computer network 12 exhibits for example a ring network topology, a linear network topology or a star network topology. Preferably, as illustrated on Figure 2, the computer network 12 exhibits a annular ring network topology.

In the example illustrated on Figure 2, the computer network 12 comprises six switches 20A-20F. In other examples, the number of switches of the computer network 12 is lower than six or higher than six.

Each switch 20A-20F comprises a plurality of connection ports P1-P8. Each switch 20A-20F is connected to one connection port of at least one other among the plurality of switches 20A-20F to form the computer network 12.

In some examples, all the switches 20A-20F of the computer network 12 have the same number of connection ports P1- P8. In other examples, the number of connection ports is different than eight and different between switches.

Each connection port P1- P8 of each switch 20A-20F has an end-device connection status ECS. Each connection port P1- P8 presents, for instance, either a status of absence of connection ("0"), if no end device 22A-22H nor switch 20A-20F is connected to that connection port P1- P8 or a status connected ("C") if one end device 22A-22H or one switch 20A-20F is connected to that connection port P1- P8.

Not more than one end device 22A-22H or switch 20A-20F, can be connected simultaneously to one same connection port P1- P8.

Each end device 22A-22H is an onboard equipment of the vehicle 8.

Each end device 22A-22H is connected to one connection port P1- P8 of one of the switches 20A-20F.

The plurality of switches 20A-20F and the plurality of end devices 22A-22H connected together with the computer network 12 define the network architecture 24.

The end devices 22A-22H are monitored and/or controlled by the network management system NMS.

The network management system NMS is connected to the computer network 12 for communicating with the switches 20A-20F and the end devices 22A-22H. The network management system NMS is for example connected to one of the switches 20A-20F of the computer network 12

The network management system NMS is configured for communicating with the switches 20A-20F and the end devices 22A-22H with implementing a communication protocol.

The communication protocol is for example a Simple Network Management Protocol (SNMP). As it will be recognized by those skilled in the art, it is possible to implement other communication protocols.

The network management system NMS comprises an acquisition module 28 configured for acquiring a current network status 30 representative of the connection status of each one of the plurality of switches 20A-20F.

The acquisition module 28 is for example configured to periodically monitor the current connection status of each switch 20A-20F such as to monitor the computer network 12 continuously.

The acquisition module 28 is for example configured to monitor the connection status of the switches 20A-20F according to a sequence with repeating the sequence periodically.

The connection status of each switch 20A-20F includes for each connection port P1-P8 of the switch 20A-20F, a connection data 32. The connection data 32 of each connection port P1-P8 indicates whether another switch 20A-20F or an end device 22A-22H is connected to the connection port P1-P8 and, optionally, an identification data 34 of said other switch 20A-20F or said end device 22A-22H connected to the connection port P1-P8

The identification data 34 of each switch 20A-20F or end device 22A-22H includes for example a fixed physical address and/or a variable identification number.

Preferably, the fixed physical address is a Media Access Control address or MAC address. The MAC address of each switch 20A-20F or end device 22A-22H is unique to that switch 20A-20F or end device 22A-22H. Two distinct switches 20A-20F or end devices 22A-22H have different fixed physical addresses, in particular different MAC addresses.

The variable identification number is for example an Internet Protocol address or IP address. The IP address of a switch 20A-20F or end device 22A-22H is an address that generally changes every time the switch 20A-20F or end device 22A-22H is connected to a computer network 12, which means that the switch 20A-20F or end device 22A-22H can change identification number after an initialization period. The initialization period is, for instance, the period of installation of the computer system 10 or a checking period of the vehicle 8 before the journey of the vehicle 8.

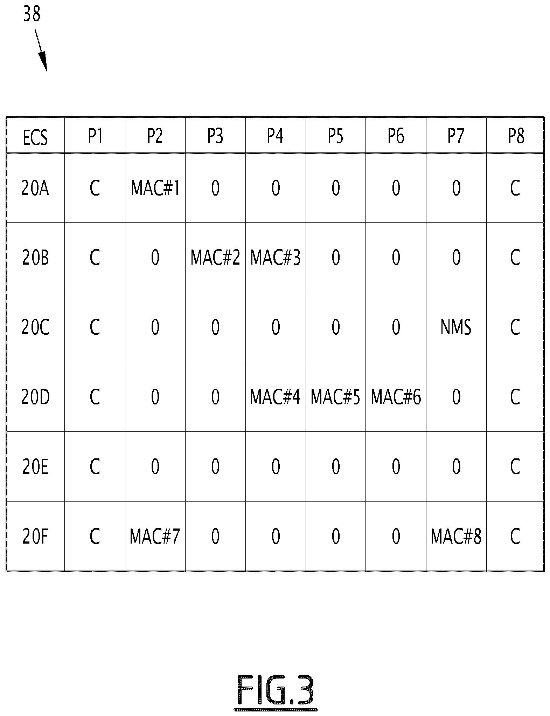

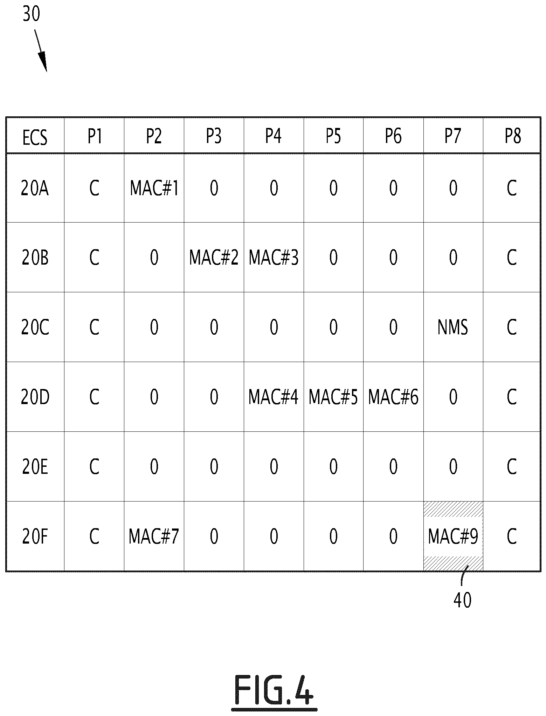

The network management system NMS comprises for example a comparison module 36 configured for comparing the current network status 30 (Figure 4) with a reference network status 38 (Figure 3) to detect an abnormality 40 (Figure 4) of the computer network 12 (comparison between the "as designed" and "as "observed" topologies).

Each abnormality 40 corresponds to the detection of a modification of the current network status 30 with respect to the reference network status 38.

Possible modifications include for example a connection of an intruder end device 221 to a connection port P1 - P8 of one of the switches 20A - 20F and/or a disconnection of one of the end devices 22A - 22H from the connection port P1 - P8 of one of the switches 20A - 20F and/or a displacement of one of the end devices 22A - 22H from one connection port P1 - P8 of one of the switches 20A - 20F to another connection P1 - P8 of one of the switches 20A - 20F , on a same switch 20A - 20F or another switch 20A - 20F.

The network management system NMS comprises for example an emitting module 50 configured to emit notifications as a function of the detection of abnormalities 40.

In some examples, the emitting module 50 is configured for emitting a notification upon detection of each abnormality 40 and/or as a function of a number of detected abnormalities 40 and/or as a function of a level of abnormality of each detected abnormality 40.

In some examples, each abnormality 40 is classified according to one or more levels of abnormalities, in particular two level of abnormalities. The levels of abnormality comprise for example a first level of abnormality and a second level of abnormality.

In some examples, notifications are emitted as a function of the level of abnormality of the detected abnormality 40.

In some examples, a warning notification is emitted upon detection of an abnormality 40 corresponding to the first level of abnormality and an alert notification 48 is emitted upon detection of an abnormality 40 corresponding to the second level of abnormality.

Preferably, the network management system NMS comprises a calculation module 51 configured to calculate a compromise value as a function of the detected abnormalities 40.

In some example, the compromise value is for example incremented upon detection of each abnormality 40.

The compromise value is for example incremented of the same value upon detection of each abnormality 40.

Alternatively, the compromise value is incremented of a first increment upon detection of an abnormality 40 of the first level of abnormality and of a second increment upon detection of an abnormality 40 of the second level of abnormality.

In some example, a notification is emitted when the compromise value reaches a compromise value. In particular, a warning notification is emitted when the compromise value reaches a warning compromise value and/or an alert notification is emitted when the compromise value reaches an alert compromise value.

In some examples, the first level of abnormality is attributed to any abnormality 40 associated to the fixed physical address of a predefined subset 52 of secondary end devices 22B, 22C that are not considered as essential for the vehicle. The secondary end devices 22B, 22C are considered as non-essential to the vehicle operation.

In some examples, the second level of abnormality is for example any abnormality 40 associated to the fixed physical address of a predefined subset 54 of primary end devices 22A that are considered as essential for the vehicle operation.

As another variant, the first level of abnormality is attributed to any abnormality 40 associated to a given subset 55 of auxiliary connection ports P1 - P8 of one or more of the switches 22A - 22H. The auxiliary connection ports P1 - P8 are for example ports that can be easily checked by an operator and/or that are not considered as a threat when compromised. The second level of abnormality is attributed to any abnormality 40 associated to a given subset 56 of essential connection ports P1 - P8 of one or more of the switches 22A - 22H. The essential connection ports P1 - P8 are for example ports that cannot be easily modified or accessed and/or that are considered critical to safety of the vehicle.

In some examples, the NMS is configured for establishing and storing the reference network status 38 during the initialization period.

The determination of the reference network status 38 is for example performed upon installation of the computer system 10 in the vehicle 8 or before a travel of the vehicle 8 and/or upon triggering by an operator.

Advantageously, the network management system NMS comprises a request module 58, configured to request a primary connection status to each switch 20A - 20F of computer network 12.

The primary connection status includes, for each connection port P1 - P8 of the switch 20A - 20F, a primary connection data. The primary connection data indicates whether another switch 20A - 20F or an end device 22A - 22H is connected to the connection port P1 - P8 and optionally a primary identification data 64 of said other switch 20A - 20F or end device 22A - 22H connected to the connection port P1 - P8 during the initialization period.

Preferably, the network management system NMS comprises an establishing module 66, configured for establishing the reference network status 38 from the primary connection status of each switch 20A - 20F, as shown in Figure 3.

In some examples, the reference network status 38 is predefined. The predefined reference network status 38 is associated to the vehicle. In such examples, the request module 58 is for example configured to store the reference network status 38.

Optionally, the network management system NMS comprises a collecting module 68 configured to collect traffic data.

The traffic data is representative of the traffic data via at least each connection port P1 - P8 associated to a potential abnormality 40. The network management system NMS is for example configured for confirming the abnormality 40 and/or determining a level of abnormality as a function of traffic data retrieved for at least each connection port P1 - P8 associated to the potential abnormality.

Each of the acquisition module 28 and the comparison module 36, the emitting module 50, the calculation module 51, the requesting module 58, the establishing module 66 and the collecting module 68 is for example implemented as a software or a software brick stored in a memory 70 and executable by a processor 72 or as a programmable logic component, such as an FPGA (Field Programmable Gate Away) or as a dedicated integrated circuit, such as an ASIC (Application Specific Integrated Circuit).

In some examples, the network system management NMS is implemented as one or more software or software bricks, i.e. in the form of a computer program. In such case, the network system management NMS may be recorded on a computer-readable medium.

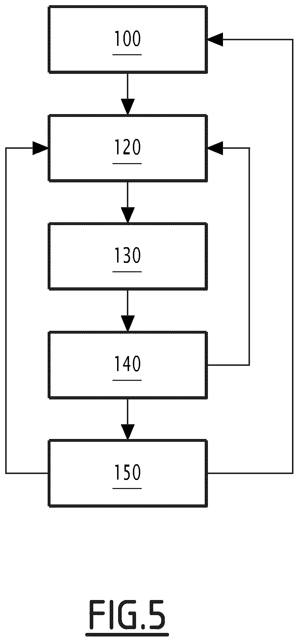

The computer-readable medium is, for example, a medium capable of storing electronic instructions and of being coupled to a bus of a computer system. By way of example, the readable medium is an optical disk, a magneto-optical disk, a ROM memory, a RAM memory, any type of non-volatile memory (e.g. EPROM, EEPROM, FLASH, NVRAM), a magnetic card or an optical card. A computer program containing software instructions is stored on the readable medium.
A method according to the invention implemented by the network system management NMS for monitoring the computer network 12 located onboard a vehicle will now be described according to Figure 5.

The method for monitoring a computer network 12 comprises:
- a step 120 of acquiring the current network status 30,
- a step 130 of comparing the current network status 30 with the reference network status 38 for detecting one or more abnormalities 40 of the computer network 12 based on the comparison of the current network status 30 and the reference network status 38;
- optionally, a step 140 of evaluation of a level of abnormality of a detected abnormality 40;
- optionally, a step 150 of emitting one or more notifications when one or more abnormalities 40 are detected.

Prior to the step 120 of acquiring the current network status 30, the method optionally comprises a step 100 of obtaining the reference network status 38.

The step 100 of obtaining the reference network status 38 comprises for example retrieving a pre-stored reference network status 38 from a memory.

Alternatively, the step 100 of obtaining the reference network status 38 comprises for example requesting the primary connection status of each connection port P1 - P8 of each switch 20A - 20F and determining the reference network status 38 as a function of the primary connection status of each connection port P1 - P8 of each switch 20A - 20F. The step 100 of determining the reference network status 38 is performed during the initialization period. The primary connection status includes of each connection port P1 - P8 of switch 20A - 20F includes the primary connection data and optionally the primary identification data 64 of the switch 20A - 20F or end device 22A connected to the connection port P1 - P8 during the initialization period. The primary identification data 64 includes the media access control MAC address of the switch 20A - 20F or end device 22A connected to the connection port P1 - P8 during the initialization period.

In the example illustrated on Figures 2 and 3, the computer network 12 comprises switches 20A - 20F each having eight connection ports P1 - P8. However, any number of switches and any number of ports per switch can be chosen according to requirements of the vehicle.

On Figure 3, a table represents the reference network status 38, with indicated the connection status of each connection port P1 - P8 of each switch 20A - 20F with including all the MAC addresses of the end devices 22A-22H connected to the switches 20A - 20F at the initialization period, and as a result, establishing the reference network status 38 from the primary connection status of each switch 20A-20F.

The switches 20A - 20F are connected in series to form a ring topology, the connection port P1 of each next switch 20A - 20F being connected to the connection port P8 of the preceding switch 20A - 20F.

The connection port P1 of the switch 20A is connected to the connection port P8 of the switch 20F which defines the preceding switch due to the ring configuration of the computer network 12.

Hence, as illustrated in the table of Figure 3, the status of the connection ports P1 and P8 of the switches 20A - 20F is connected C.

The network management system NMS is for example connected to one connection port P1 - P8 of one of the switches 20A - 20F. As illustrated on Figures 2 and 3, the network management system NMS is connected to the connection port P7 of the switch 20C.

All the connection ports P1 - P8 of the switches 20A - 20F, except the ones connected to another one of the switches 20A - 20F and one to which the network management system NMS is connected, exhibit either an absence of connection ("0") or a connection with one of the end devices 22A - 22H indicating the MAC address of the end device 22A - 22H, indicated as MAC#1 for end device to MAC#8 for end device 22H for illustration purposes.

If an acquiring step 120 is performed without any modification of the computer network 12 and not disconnection of end device 22A - 22H and/or connection of an intrusion device 221 and/or change of connection port P1 - P8 of an end device 22A - 22H, the acquired current network status 30 is in the same way as the reference connection status 38 of Figure 3. It is thus determined that there is no abnormality 40 or potential abnormality 40.

If an acquiring step 120 is performed after a modification of the computer network 12 due to a disconnection of end device 22A - 22H and/or connection of an intrusion device 22I and/or change of connection port P1 - P8 of an end device 22A - 22H, the acquired current network status 30 differs from the reference network status 38.

As an illustrative example, if an acquiring step 120 is performed after end device 22G has been replaced by intrusion end device 22I on connection port P7 of switch 20F, the current network status 30 as in Figure 4 is obtained and differs from the reference network status 38.

In the subsequent step of comparing 130 the current network status 30 with the reference network status 38, the abnormality 40 of the computer system 10 is detected.

The optional step 140 of evaluation of a level of abnormality comprises for example the calculation of a compromise value.

The compromise value is calculated for example by incrementing the compromise value for each new abnormality 40 that is detected, optionally as a function of the level of abnormality of the abnormality 40 .

If the compromise value is lower than one or more predefined compromise value (warning compromise value or alert compromise value), the method goes back to the step 120 of acquisition since the comparison value has determined that the current network 30 is acceptable.

If the compromise value is higher than one or more predefined compromise value (warning compromise value or alert compromise value), the method goes forward to the step 150 of emitting a notification, preferably as a function of the compromise value.

In the emitting step 150, a notification is emitted upon detection of an abnormality 40 or as a function of the compromise value calculated based on this abnormality 40. The notification is e.g. either the alert notification or the warning notification.

In some examples, in case the abnormality 40 or the compromise value updated based on the abnormality 40 corresponds to a warning notification, the method optionally comprises analyzing traffic data to confirm the abnormality 40.

During this step, no action is taken and only an operator of the vehicle 8, such as the train operator in the case of the train, can make a decision. If the operator estimates that the abnormality 40 is not a potential intrusion, the operator chooses either to go back to the request step 100, in case that a new initialization is necessary, or to go back to the acquiring step 120, in case that the notification was false.

Thanks to the above described features, in particular the network management system NMS, the computer system monitors the computer network 12. Indeed, the reference network status 30 "as installed" of on-board electronic is built and compare to the current network status 38 to evaluate the potential intrusion.

The star topology is advantageous because of its redundancy. Indeed, if one the switches 20 does not work, the end devices 22A-22H connected can be easily displaced to other switches 20 presenting available ports P for connection.

As an example, this computer network provide some unused connection ports 55. Indeed, in case of switch 20D failure, the end devices 22D-22F connected can be easily displaced to other switch 20E presenting available ports P2, P3 or P7 for end devices 22D to 22F connection.

The utilization of internet protocol IP and media control access MAC addresses is particularly advantageous as it provides the ability to the computer system 10 to detect dynamically potential intrusion and raise alarm.

The computer system 10 is a pure stand-alone solution without impact on existing architecture as the reference network status 38 does not have to be known in advance.

The utilization of traffic data to confirm the abnormality 40 is very advantageous as it allows to improve the accuracy of the evaluation of the potential intrusion.

In comparison with a firewall (not represented), the security gateway 14 provides an additional security that is needed to operate in critical infrastructure and requiring a high level of security. The security gateway 14 knows exactly information exchanged between the computer network 12 and the auxiliary computer network 16.

## Claims

1. Method for monitoring a computer network (12) located onboard a vehicle, for example a train, the computer network (12) comprising a plurality of switches (20A-20F) and a plurality of end devices (22A-22H) connected together with defining a network architecture (24), each switch comprising a plurality of connection ports (P1-P8), each switch being connected to one connection port (P1) of at least one other among the plurality of switches (20A-20F) and each end device (22A-22H) being connected to one connection port (P1) of one of the switches (20A-20F) ,
**characterized in that** the method comprises the following steps implemented by a network management system (NMS) provided onboard the vehicle:
- an acquiring step (120) to acquire a current network status (30) of each switch among the plurality of switches (20A-20F), the current network status (30) of each switch (20A-20F) including for each connection port (P1-P8) of each switch (20A-20F) a connection data indicating whether another switch (20A-20F) or an end device (22A-22H) is connected to the connection port and optionally an identification data (34) of said switch (20A-) or end device (22A-22H) connected to the connection port (P1-P8);
- a comparing step (130) to compare the current network status (30) with a reference network status to detect an abnormality of the computer system.

2. Method according to claim 1, wherein the acquiring step (120) is repeated periodically to monitor the computer network continuously.

3. Method according claim 1 or 2, wherein the method comprises also the following steps:
- a requesting step (100) to request a primary connection status for each switch of the plurality of switches, the primary connection status including for each connection port of the switch a primary connection data indicating whether another switch or an end device is connected to the connection port and optionally a primary identification data of said switch or end device connected to the connection port during an initialization period; and
- establishing the reference network status (38) from the primary connection status of each switch (20A-20F).

4. Method according to any one of claims 1 to 3, wherein the method comprises an emitting step (150) to emit a notification upon detection of the abnormality (40) .

5. Method according to any one of claims 1 to 4, wherein at emitting step (150), a warning notification is emitted upon detection of an abnormality (40) corresponding to a first level of abnormality and an alert notification (48) is emitted upon detection of an abnormality (40) corresponding to a second level of abnormality, the second level being higher than the first level.

6. Method according to claim 4 or 5, comprising a step of evaluation (140), wherein a compromise value is calculated representing a level of abnormality, the compromise value being incremented upon detection of each additional abnormality.

7. Method according to any one of claims 1 to 6, wherein the identification data of each end device includes a fixed physical address and/or a variable identification number.

8. Method according to claim 7, wherein the fixed physical address is a media access control address and/or the variable identification number is an internet protocol address.

9. Method according to any one of claims 1 to 8, wherein at emitting step (150), traffic data representative of the traffic data is collected via at least each connection port associated to a potential abnormality (40), the traffic data being used in the method to confirm the abnormality (40).

10. Method according to any one of claims 1 to 9, wherein the comparing step includes a detection of modification(s) of the current network status (30) with respect to the reference network status (38), the modification(s) including: connection of at least one new end device to the connection port of one of the switches and/or disconnection of at least one end device from the connection port of one of the switches and/or a displacement of at least end device from one connection port of one of the switched to another connection port of one of the switches.

11. Method according to any one of claims 1 to 10, wherein the computer network is a part of a train control and monitoring system (TCMS) of a train.

12. Method according to any one of claims 1 to 11, wherein the network architecture (24) exhibits a ring network topology, a linear network topology or a star network topology.

13. Computer system provided onboard a vehicle, for example a train, the computer system comprising a computer network (12) comprising a plurality of switches (20A-20F) and a plurality of end devices (22A-22H) connected together and defining an network architecture (24), each switch comprising a plurality of connection ports (P1-P8), each switch being connected to one connection port of at least one other among the plurality of switches (20A-20F) and each end device being connected to one connection port of one of the switches (20A-20F),
**characterized in that** it comprises a network management system (NMS) provided onboard the vehicle, the network management system (NMS) comprising:
- an acquisition module (28) adapted for acquiring a current network status (30) of each switch of the plurality of switches (20A-20F), the current network status (30) of each switch including for each connection port of the switch a connection data indicating whether another switch or an end device is connected to the connection port and optionally an identification data of said other switch or said end device; and
- a comparison module (36) adapted for comparing the current network status (30) with a reference network status (38) to detect an abnormality of the computer network.

14. Computer system according to claim 13, wherein the computer network (12) is connected to an auxiliary computer network (16) provided onboard the vehicle via at least one security gateway (14).

15. Vehicle comprising a computer system as in claim 13 or 14, in particular a railway vehicle or a train comprising a train control and monitoring system (TCMS) including the computer system as in claim 13 or 14.
